# FASCICULE DE BREVET EUROPEEN

(11) **EP 3 009 795 B1**
(45) Date de publication et mention de la délivrance du brevet: **21.06.2017**
(21) Numéro de dépôt: 15188551.4
(22) Date de dépôt: 06.10.2015
(51) Int. Cl.: G01C 21/10, B63B 49/00, G01C 21/20

(54) **OBJET PORTABLE POUR REGATE**
TRAGBARER GEGENSTAND FÜR REGATTA
PORTABLE OBJECT FOR REGATTA

(30) Priorité: 10.10.2014 EP 14188458
(43) Date de publication de la demande: 20.04.2016
(73) Titulaire: The Swatch Group Research and Development Ltd., 2074 Marin (CH)
(72) Inventeur: Faure, Cédric, 2016 Cortaillod (CH)
(74) Mandataire: Goulette, Ludivine

(56) Documents cités:
- WO-A1-2010/126821
- US-A1- 2013 054 138
- RaceQ's.com: "Starting Strategies Episode Two - The Full Speed Approach", , 26 août 2014 (2014-08-26), XP055184347, Extrait de l'Internet: URL:http://web.archive.org/web/20140826123 803/http://raceqs.com/podcast/3-starting-s trategies-episode-two-the-full-speed-appro ach/# [extrait le 2015-04-20]

## Description

L'invention se rapporte à un procédé d'assistance au départ d'un bateau participant à une régate. Elle se rapporte également au dispositif mettant en oeuvre le procédé.

### ARRIERE PLAN TECHNOLOGIQUE

Dans une course de régate, les bateaux ne doivent pas franchir la ligne de départ avant le top départ sous peine de devoir faire demi-tour pour ensuite repasser la ligne de départ.

Cette ligne de départ peut être définie par les coordonnées de position de deux points définissant une ligne virtuelle.

Dans ces courses de régate, il convient non seulement de franchir la ligne de départ le premier en respectant le top départ mais également avec une vitesse du bateau la plus proche de sa vitesse maximale.

Dans une course de régate, les concurrents ont un pré-départ qui se produit 5 minutes avant le top départ pour manoeuvrer afin de passer la ligne de départ au mieux.

Il est connu un dispositif d'assistance au franchissement de ligne de départ comprenant un moyen pour créer une ligne de départ virtuelle, un moyen en vue de connaitre la position du bateau instantanément par rapport à la ligne virtuelle, un moyen en vue de connaitre la vitesse instantanée du bateau et des moyens de calculs pour indiquer la distance avec la ligne de départ virtuelle et le temps restant avant le top départ, comme par exemple illustré dans le document US2013/0054138.

L'art antérieur divulgue également l'affichage d'une ligne de déplacement théorique ("pacer line" en anglais) atteignant la ligne de départ à la fin du compte à rebours, comme par exemple exécuté par l'application RaceQs. A partir de cette connaissance de la distance restante et du temps restant, le bateau doit adapter sa vitesse pour franchir la ligne, ce qui laisse au commandant du bateau beaucoup de choix et donc d'incertitudes.

Or, si le skipper doit manoeuvrer son bateau pour s'adapter à ces informations, cela affectera le départ.

### RESUME DE L'INVENTION

L'invention vise à fournir un produit et son procédé de fonctionnement qui offre une gestion plus simple et fiable du départ d'une régate tout en restant intuitive.

A cet effet, l'invention se rapporte à un procédé d'assistance au départ d'un bateau participant à une régate comprenant avant le franchissement d'une ligne de départ une pré-course d'une durée T, ce procédé comprenant une première étape visant à permettre la création et la mémorisation de la ligne de départ sous une forme virtuelle, la détermination de la vitesse instantanée du bateau et de son positionnement par rapport à la ligne de départ en vue de fournir au moins une indication sur la conduite à tenir pendant la pré-course ce procédé étant caractérisé en ce que :
- dans une seconde étape, préalablement à la course, on simule au moins un départ de course pour enregistrer au moins une fois un paramètre qu'est la vitesse maximale dite vitesse d'essai du bateau pour en déduire une distance maximale qui pourrait être parcourue pendant la durée de pré-course si le bateau se déplaçait à la dite vitesse d'essai et déterminer ainsi la position d'une ligne dite d'éloignement maximal ; et
- dans une troisième étape après avoir positionné le bateau entre la ligne d'éloignement maximal et la ligne de départ, on déclenche un compte à rebours de durée durant laquelle, d'une part, on déplace la ligne d'éloignement vers la ligne de départ à la vitesse d'essai pendant que le bateau se déplace également vers la ligne de course à une vitesse inférieure à la vitesse maximale d'essai et pendant laquelle, d'autre part, on compare les paramètres de déplacement réel du bateau avec le déplacement de la ligne d'éloignement pour fournir des indications sur le rapprochement de la ligne d'éloignement avec le bateau pour que le bateau puisse adapter sa vitesse et/ou sa route de sorte que lorsque le bateau est rattrapé par la ligne d'éloignement, ledit bateau se déplace à la même vitesse que la dite ligne d'éloignement.

Dans un premier mode de réalisation avantageux, durant la seconde étape, l'enregistrement de la vitesse maximale est opéré plusieurs fois, la vitesse maximale de la ligne d'éloignement étant la moyenne des vitesses maximales enregistrées.

Dans un second mode de réalisation avantageux, les indications sur la conduite à tenir sont sous une forme numérique ou sous une forme visuelle.

L'invention se rapporte à un dispositif pour l'assistance au départ d'un bateau courant une régate comprenant un calculateur, un moyen de positionnement par satellite, un moyen de mémorisation, un moyen en vue d'introduire dans le calculateur et/ou le moyen de mémorisation des informations relatives à la position d'une ligne de départ,
ce dispositif étant caractérisé en ce qu'il comprend des moyens pour déterminer au préalable une vitesse maximale d'essai, des moyens pour calculer une distance d'éloignement correspondant à la vitesse maximale calculée multipliée par un temps correspondant à la durée d'une pré-course, des moyens pour simuler le déplacement d'une ligne dite d'éloignement à la vitesse dite d'essai, des moyens 16 de comparaison de la vitesse et de la position du bateau par rapport au déplacement de la ligne d'éloignement, des moyens pour fournir des indications sur l'écart de vitesse et/ou la distance entre le bateau et la ligne d'éloignement et des moyens 19 d'affichage.

Dans un premier mode de réalisation avantageux, le dispositif comprend des moyens en vue de calculer une évolution de la vitesse du bateau pour que son déplacement coïncide avec un déplacement optimisé par rapport à une ligne de départ à franchir.

Dans un second mode de réalisation avantageux, le dispositif est intégré dans un objet portable tel qu'un téléphone mobile ou une tablette.

Dans un troisième mode de réalisation avantageux, le dispositif est intégré dans une montre.

Dans un quatrième mode de réalisation avantageux, les moyens d'affichage sont numériques ou visuels.

Dans un autre mode de réalisation avantageux, les moyens d'affichage comprennent au moins une aiguille se déplaçant sur un repère.

Dans un autre mode de réalisation avantageux, les moyens d'affichage comprennent des indicateurs lumineux d'une première couleur, un indicateur lumineux d'une seconde couleur et des indicateurs lumineux d'une troisième couleur de sorte que les indicateurs lumineux d'une première couleur s'allument en cas de retard, les indicateurs lumineux d'une troisième couleur s'allument en cas d'avance et l'indicateur lumineux d'une seconde couleur s'allume en cas de position optimale.

Dans un autre mode de réalisation avantageux, la glace de la montre est tactile.

### BREVE DESCRIPTION DES FIGURES

L'invention sera bien comprise à l'aide de la description ci-après faite à titre d'exemple non limitatif en regard du dessin qui représente :
La figure 1 représente une vue d'un plan d'eau montrant la ligne de départ et le bateau.
La figure 2 représente une vue schématique d'un dispositif d'assistance aux régates.
Les figures 3 et 3bis représentent une vue d'un plan d'eau montrant la ligne d'éloignement à sa distance maximale de la ligne de départ.
La figure 4 représente une vue du plan d'eau de la figure 1 le compte à rebours étant lancé.
La figure 5 représente une vue du plan d'eau de la figure 1, le bateau se déplaçant à la même vitesse que la ligne d'éloignement.
La figure 6 représente une vue d'une montre équipée du dispositif d'assistance.
La figure 7 représente une vue d'une variante de montre équipée du dispositif d'assistance.

### DESCRIPTION DETAILLEE

En se reportant aux différentes figures, on voit qu'il a été représenté un plan d'eau pour une régate de bateaux.

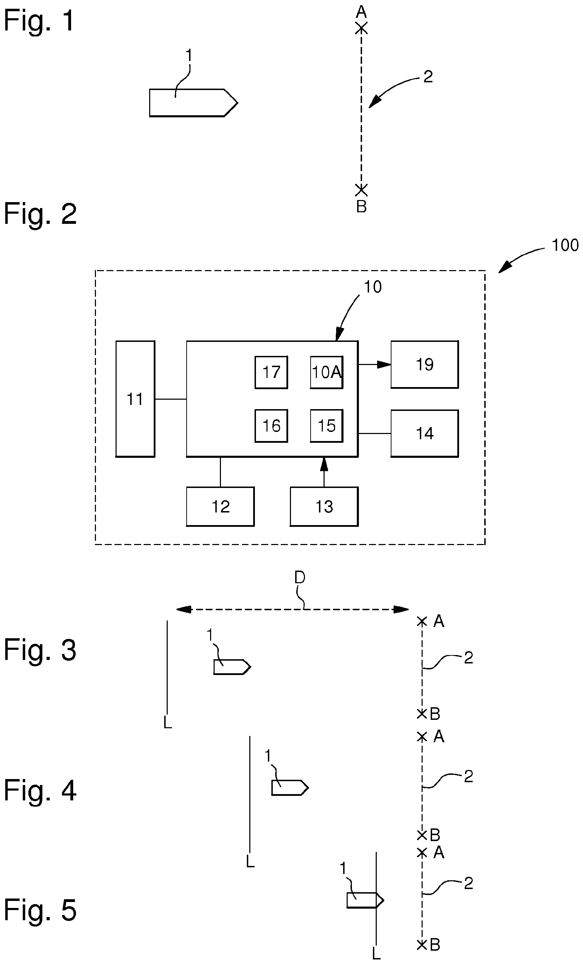

Il a été représenté, à la figure 1, la ligne 2 de départ qui peut se déterminer à partir de deux points A, B géographiques dont les coordonnées sont, par exemple, des données fournies par des satellites géostationnaires. On a également représenté un bateau 1 qui doit franchir la ligne 2 de départ.

Le départ d'une régate est un moment important. En effet, il faut franchir la ligne de départ après le top départ et à la vitesse la plus importante car si la ligne de départ est franchie avant le top départ, le concurrent doit faire demi-tour pour refranchir ensuite la ligne dans le bon sens.

En effet, si pour éviter de franchir la ligne en avance, le concurrent fait chuter brutalement sa vitesse, il lui faudra un délai avant de reprendre de la vitesse et son départ sera mauvais.

Il est donc fait appel à un appareil portable 100 utilisant un procédé d'assistance au départ d'un bateau participant à une régate.

L'appareil portable 100, visible à la figure 2, comprendra, un calculateur 10 pour la gestion globale de l'appareil portable. L'appareil portable 100 comprend en outre un moyen 11 de positionnement par satellite, un moyen 12 de mémorisation pour l'enregistrement des données et un moyen 13 en vue d'introduire dans le calculateur et/ou la mémoire des informations relatives à la position d'une ligne de départ. Ce moyen 13 peut être un ou plusieurs boutons ou des moyens tactiles.

Ces moyens seront complétés par des moyens 14 pour déterminer au préalable une vitesse maximale d'essai associant par exemple une base de temps et le dispositif de localisation pour déterminer une vitesse. Toutefois, il pourra être prévu que la vitesse puisse être récupérée d'un appareil extérieur.

Le calculateur 10 qui pourra être un microprocesseur ou microcontrôleur, comprendra des moyens 10A pour calculer une distance d'éloignement correspondant à la vitesse maximale calculée multipliée par un temps T correspondant à la durée d'une pré-course, des moyens 15 pour simuler le déplacement d'une ligne dite d'éloignement à la vitesse Vm dite d'essai, des moyens 16 de comparaison de la vitesse et de la position du bateau par rapport au déplacement de la ligne L d'éloignement et des moyens 17 pour fournir des indications sur l'écart de vitesse et/ou la distance entre le bateau et la ligne d'éloignement.

Accessoirement, il comprend des moyens en vue de calculer une évolution de la vitesse du bateau pour que son déplacement coïncide avec un déplacement optimisé par rapport à une ligne de départ à franchir, et des moyens 19 d'affichage.

Lors d'une première étape visible à la figure 1, les points géographiques formant la ligne de départ sont enregistrés dans ledit objet. Ces points géographiques peuvent être entrés manuellement ou téléchargés ou enregistrés en se positionnant sur un point de la ligne de départ grâce à son GPS et en appuyant sur un bouton de l'objet portable, la position sera mémorisée. L'opération est répétée pour obtenir le deuxième point permettant de tracer la ligne de départ.

Ce procédé comprend ensuite une seconde étape ou étape préparatoire d'une durée T.

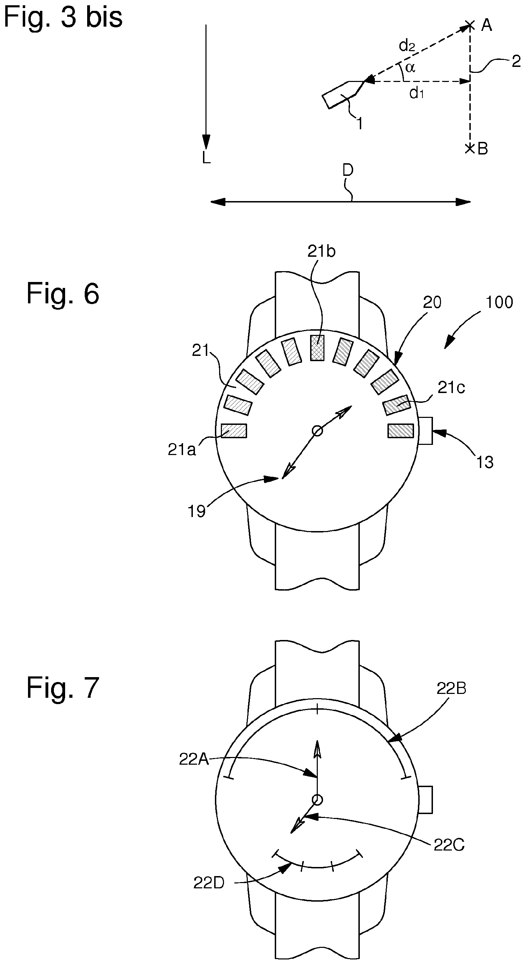

Lors de cette seconde étape visible à la figure 3, on simule au moins un départ de course pour mesurer et enregistrer au moins une fois un paramètre qu'est la vitesse maximale Vm dite vitesse d'essai du bateau via les moyens 14 pour déterminer une vitesse. Cette simulation prend la forme d'un test de pré-course en conditions réelles. Cette information de vitesse est utilisée par les moyens 10A pour calculer une distance d'éloignement D maximale qui pourrait être parcourue pendant la durée T de pré-course si le bateau se déplaçait à la dite vitesse d'essai et déterminer ainsi la position d'une ligne L dite d'éloignement maximal. Cette distance D est enregistrée par le calculateur 10 via le moyen 12 de mémorisation. Ce dernier peut être une mémoire de type flash.

Dans une troisième étape ou étape de départ, le bateau 1 est positionné entre la ligne L d'éloignement maximal et la ligne 2 de départ. Le départ d'un compte à rebours de durée T est déclenché.

Lors de ce compte à rebours, le calculateur déplace la ligne L d'éloignement vers la ligne de départ à la vitesse d'essai Vm comme visible aux figures 4 et 5.

On compare alors, via le calculateur, des paramètres de position et/ou de déplacement réel du bateau 1 avec le déplacement de la ligne L d'éloignement. En effet, le bateau peut être immobile ou être en léger mouvement.

Ce calculateur 10 fournit ainsi des indications sur le rapprochement de la ligne L d'éloignement avec le bateau 1 pour que le bateau 1 adapte sa vitesse v et/ou sa route. Cela permet, lorsque le bateau 1 est rattrapé par la ligne d'éloignement, audit bateau 1 de se déplacer à la même vitesse que celle de la dite ligne d'éloignement.

Par conséquent, au fur et à mesure du temps, le bateau 1 va accélérer et la ligne L d'éloignement va se rapprocher du bateau. L'écart entre les vitesses va se restreindre ainsi que la distance entre la ligne d'éloignement et le bateau 1. On peut donc calculer des paramètres permettant une évolution de la vitesse et/ou de la route du bateau 1 pour que son déplacement coïncide avec le déplacement de la ligne d'éloignement L, bien évidemment avant le passage de la ligne de départ 2.

On comprendra que les différentes mesures comme celle de la distance du bateau 1 par rapport à la ligne de départ 2 prennent en compte la position relative du bateau. En effet, le bateau 1, suivant la direction du vent, ne navigue pas toujours en ligne droite.

Ce fait implique l'existence d'une distance réelle et d'une distance relative. La distance réelle d1 est la distance la plus courte entre le bateau 1 et la ligne de départ 2 alors que la distance dite relative d2 est la distance entre le bateau 1 et la ligne de départ 2 en prenant en compte la direction du bateau. La distance réelle d1 passe par une droite perpendiculaire à la ligne de départ 2. La distance relative d2 se calcule en déterminant l'angle α entre la droite perpendiculaire à la ligne de départ 2 qui est la distance réelle d1 et la droite formée par la direction du bateau comme visible à la figure 3bis, d2 =d1/cos α.

De ce fait, le calculateur 10 est capable, suivant la position du bateau 1 et sa direction, de déterminer la distance réelle d1 et la distance relative d2. On comprendra que pour un départ de régate, la distance réelle d1 est la distance importante car le bateau 1 est susceptible de louvoyer de sorte que la distance relative soit instable puisque variant selon l'angle α alors que la distance réelle reste stable. Le but est d'avoir la vitesse ainsi que la position du bateau 1 pour que la fin de son parcours lors de la pré-course coïncide, tant en distance de la ligne de départ 2 qu'en vitesse, avec le déplacement de la ligne d'éloignement L qui correspond à un franchissement de la ligne de départ 2 optimisé.

Pour cela, le dispositif fournit au bateau 1 des informations, par exemple, l'écart des vitesses, la distance entre la ligne d'éloignement L et la position du bateau 1, ainsi que des instructions prédictives de modifications de la vitesse.

Ces informations sont fournies par des moyens d'information 20 et des moyens 19 d'affichage. Ces moyens d'informations 20 peuvent se présenter soit sous une forme numérique c'est-à-dire des chiffres soit sous une forme d'indications visuelles comme des indicateurs lumineux 21 ou des aiguilles 22 se déplaçant sur un repère.

Préférentiellement, l'information est présentée sous forme d'indications visuelles. Effectivement, ces indications visuelles sont plus faciles à appréhender dans la mesure où le pilote du bateau 1 à d'autres tâches en cours. Par exemple, des indicateurs lumineux peuvent s'allumer au fur et à mesure ou des couleurs peuvent être utilisées.

Dans le cas de couleur, un exemple peut comprendre une pluralité d'indicateurs lumineux sous forme de segments. Ces indicateurs lumineux peuvent être de différentes couleurs, les couleurs étant associées à une information particulière.

Dans un exemple de l'invention visible à la figure 6, l'objet portable est muni de 11 indicateurs lumineux. En détails, on aura 5 indicateurs lumineux d'une première couleur 21 a, un indicateur lumineux d'une seconde couleur 21 b et 5 indicateurs lumineux d'une troisième couleur 21 c.

Lorsque le compte à rebours est déclenché, les 5 indicateurs lumineux d'une première couleur 21a sont allumés. La première couleur pouvant être le rouge. Lorsque la ligne L d'éloignement va se rapprocher, des indicateurs lumineux vont s'éteindre de sorte que plus la ligne L d'éloignement est proche et plus le nombre d'indicateurs lumineux 21a allumés sera faible. A ce moment-là, le bateau 1 accélère.

Lorsque la ligne L d'éloignement est au niveau du bateau 1 et que la vitesse de cette ligne d'éloignement L est proche de la vitesse du bateau 1, l'indicateur lumineux d'une seconde couleur 21 b va s'allumer. La seconde couleur pouvant être le vert. Cela signifie que le bateau 1 se trouve dans une phase optimale c'est-à-dire qu'il se trouve à une bonne distance et avec une bonne vitesse pour passer la ligne de départ 2 de façon optimale.

Si les indicateurs lumineux d'une troisième couleur 21c commencent à s'allumer, cela signifie que le bateau est en avance par rapport à cette ligne d'éloignement L et qu'il doit ralentir. La troisième couleur pouvant être l'orange.

On peut donc avertir par une répartition droite - gauche, que le bateau 1 est en avance, en phase ou en retard par rapport à une courbe d'évolution de son déplacement suivant la couleur allumée. Le skipper est capable de savoir s'il est en avance (couleur orange), en retard (couleur rouge) ou dans le timing (couleur verte).

Cela permet aussi d'indiquer si cette avance ou ce retard sont importants par le biais du nombre d'indicateurs allumés 21.

Bien entendu, il est envisageable que les indicateurs lumineux se présentent sous la forme de trois barrettes, ayant chacune une couleur. Les barrettes pour signaler l'avance ou le retard sont alors constituées d'une pluralité de zones de sorte que plus l'avance ou le retard est important et plus le nombre de zones allumées sera important.

Ces moyens sont logés dans une enveloppe d'un produit portable tel qu'un téléphone, une tablette ou un boitier de montre.

La vitesse de déplacement du bateau 1 peut être obtenue par le positionnement satellitaire du type GPS (Global Positioning System). L'appui sur un bouton de la montre ou du clavier du téléphone permet également d'enregistrer la vitesse maximale. Il est aussi possible d'obtenir cette vitesse via un capteur externe.

Le dispositif peut ainsi, comme visible à la figure 7, comporter un cadran comprenant une aiguille 22A qui en position 12 h indique que l'écart entre la vitesse instantanée et la vitesse de la ligne d'éloignement est égale à zéro. Si l'aiguille se déplace vers la droite sur une échelle 22B cela pourrait signifier que la vitesse instantanée est supérieure à la vitesse de la ligne d'éloignement donc qu'il faut ralentir, et si l'aiguille se déplace vers la gauche que la vitesse instantanée n'est pas suffisante. L'amplitude du déplacement angulaire donne une idée de l'importance de la différence ; il est aussi possible de placer l'aiguille devant un pictogramme explicite représentant par exemple un signe - ou un signe +.

Une deuxième aiguille 22C peut comme la précédente indiquer la distance qui sépare la ligne d'éloignement du bateau sur une échelle 22D.

Au lieu d'aiguilles, ce peut être des segments en forme de parts de camembert.

Dans la mesure où la simulation se fait avant la course, on peut prendre en compte les conditions de temps en faisant la moyenne de différents essais. Cette moyenne pourrait être affectée d'un correctif en fonction de la vitesse du vent mesurée au moment de la course. La vitesse maximale de la ligne d'éloignement peut être la moyenne de plusieurs simulations.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Le moyen 12 de mémorisation pourra être une mémoire de masse à semi-conducteurs réinscriptible utilisant la technologie NOR ou NAND.

Par ailleurs, la présente invention ne sera pas limitée à un produit portable tel qu'un téléphone, une tablette ou un boitier de montre mais pourra aussi être un bracelet ou un ordinateur portable.

## Revendications

1. Procédé d'assistance au départ d'un bateau (1) participant à une régate comprenant avant le franchissement d'une ligne (2) de départ une pré-course d'une durée (T), ce procédé comprenant une première étape visant à permettre la création et la mémorisation de la ligne (2) de départ sous une forme virtuelle, la détermination de la vitesse (V) instantanée du bateau et de son positionnement par rapport à la ligne de départ en vue de fournir au moins une indication sur la conduite à tenir pendant la pré-course ce procédé étant **caractérisé en ce que** :
- dans une seconde étape, préalablement à la course, on simule au moins un départ de course, en réalisant un test de pré-course, pour mesurer et enregistrer au moins une fois un paramètre qu'est la vitesse maximale Vm dite vitesse d'essai du bateau pour en déduire une distance (D) maximale qui pourrait être parcourue pendant la durée de pré-course si le bateau se déplaçait à la dite vitesse d'essai et déterminer ainsi la position d'une ligne L dite d'éloignement maximal ; et
- dans une troisième étape après avoir positionné le bateau entre la ligne L d'éloignement maximal et la ligne (2) de départ, on déclenche un compte à rebours de durée T durant laquelle, d'une part, on déplace la ligne L d'éloignement vers la ligne de départ à la vitesse d'essai (Vm) pendant que le bateau se déplace également vers la ligne de course à une vitesse (V) inférieure à la vitesse maximale d'essai et pendant laquelle, d'autre part, on compare les paramètres de déplacement réel du bateau avec le déplacement de la ligne d'éloignement pour fournir des indications sur le rapprochement de la ligne d'éloignement avec le bateau pour que le bateau puisse adapter sa vitesse et/ou sa route de sorte que lorsque le bateau est rattrapé par la ligne d'éloignement, ledit bateau se déplace à la même vitesse que la dite ligne d'éloignement.

2. Procédé d'assistance au départ d'un bateau selon la revendication 1 **caractérisé en ce que**, durant la seconde étape, l'enregistrement de la vitesse maximale (Vm) est opérée plusieurs fois, la vitesse maximale de la ligne d'éloignement étant la moyenne des vitesses maximale Vm enregistrées.

3. Procédé d'assistance au départ d'un bateau selon les revendications 1 ou 2 **caractérisé en ce que** les indications sur la conduite à tenir sont sous une forme numérique ou sous une forme visuelle.

4. Dispositif (100) pour l'assistance au départ d'un bateau courant une régate comprenant un calculateur (10), un moyen (11) de positionnement par satellite, un moyen (12) de mémorisation, un moyen (13) en vue d'introduire dans le calculateur et/ou le moyen de mémorisation des informations relatives à la position d'une ligne de départ,
ce dispositif étant **caractérisé en ce qu'**il comprend des moyens (14) pour mesurer au préalable une vitesse maximale d'essai, des moyens (10A) pour calculer une distance d'éloignement correspondant à la vitesse maximale calculée multipliée par un temps (T) correspondant à la durée d'une pré-course, des moyens (15) pour simuler le déplacement d'une ligne dite d'éloignement à la vitesse (Vm) dite d'essai, des moyens (16) de comparaison de la vitesse et de la position du bateau par rapport au déplacement de la ligne L d'éloignement, des moyens (17) pour fournir des indications sur l'écart de vitesse et/ou la distance entre le bateau et la ligne d'éloignement et des moyens (19) d'affichage.

5. Dispositif pour l'assistance au départ d'un bateau courant une régate selon la revendication 4, **caractérisé en ce qu'**il comprend des moyens (18) en vue de calculer une évolution de la vitesse du bateau pour que son déplacement coïncide avec un déplacement optimisé par rapport à une ligne de départ à franchir.

6. Dispositif pour l'assistance au départ d'un bateau courant une régate selon la revendication 4 ou 5, **caractérisé en ce que** le dispositif (100) est intégré dans un objet portable, tel qu'un téléphone mobile ou une tablette.

7. Dispositif pour l'assistance au départ d'un bateau courant une régate selon la revendication 4 ou 5, **caractérisé en ce que** le dispositif est intégré dans une montre.

8. Dispositif pour l'assistance au départ d'un bateau courant une régate selon la revendication 4 ou 6 ou 7, **caractérisé en ce que** les moyens d'affichage (19) sont numériques ou visuels.

9. Dispositif pour l'assistance au départ d'un bateau courant une régate selon la revendication 8, **caractérisé en ce que** les moyens d'affichage (19) comprennent au moins une aiguille (22A, 22C) se déplaçant sur un repère (22B, 22D).

10. Dispositif pour l'assistance au départ d'un bateau courant une régate selon la revendication 8, **caractérisé en ce que** les moyens d'affichage (19) comprennent des indicateurs lumineux d'une première couleur (21 a), un indicateur lumineux d'une seconde couleur (21 b) et des indicateurs lumineux d'une troisième couleur (21c) de sorte que les indicateurs lumineux d'une première couleur s'allument en cas de retard, les indicateurs lumineux d'une troisième couleur s'allument en cas d'avance et l'indicateur lumineux d'une seconde couleur s'allume en cas de position optimale.

11. Dispositif pour l'assistance au départ d'un bateau courant une régate selon la revendication 7, **caractérisé en ce que** la glace de la montre est tactile.

## Patentansprüche

1. Verfahren zum Unterstützen beim Start eines Bootes (1), das an einer Regatta teilnimmt, die vor dem Überfahren einer Startlinie (2) einen Vorwettlauf mit einer Dauer (T) umfasst, wobei dieses Verfahren umfasst: einen ersten Schritt, der bezweckt, das Erzeugen und das Speichern der Startlinie in virtueller Form und das Bestimmen der momentanen Geschwindigkeit (V) des Bootes und seiner Position in Bezug auf die Startlinie zu ermöglichen, um mindestens eine Angabe über den während des Vorwettlaufs zu haltenden Kurs bereitzustellen, wobei dieses Verfahren **dadurch gekennzeichnet ist, dass**:
- in einem zweiten Schritt vor dem Wettlauf mindestens ein Wettlaufstart simuliert wird, indem ein Vorwettlauf-Test ausgeführt wird, um mindestens einmal einen Parameter, der die Maximalgeschwindigkeit Vm, die sogenannte Testgeschwindigkeit des Bootes, ist, zu messen und aufzuzeichnen, um daraus eine maximale Strecke (D) abzuleiten, die während der Dauer des Vorwettlaufs durchfahren werden könnte, falls sich das Boot mit der Testgeschwindigkeit bewegen würde, und um die Position einer Linie L, der sogenannten maximalen Entfernung, zu bestimmen; und
- in einem dritten Schritt, nachdem das Boot zwischen der Linie L maximaler Entfernung und der Startlinie (2) positioniert worden ist, eine Abwärtszählung mit der Dauer T ausgelöst wird, während derer einerseits die Entfernungslinie L zu der Startlinie mit der Testgeschwindigkeit (Vm) verschoben wird, während sich das Boot mit einer Geschwindigkeit (V), die kleiner ist als die maximale Testgeschwindigkeit, ebenfalls zu der Wettlauflinie bewegt, und während derer andererseits die Parameter der tatsächlichen Bewegung des Bootes mit der Verschiebung der Entfernungslinie verglichen werden, um Angaben über die Annäherung der Entfernungslinie an das Boot zu liefern, damit das Boot seine Geschwindigkeit und/oder seine Bahn in einer Weise anpassen kann, dass sich das Boot dann, wenn es von der Entfernungslinie eingeholt wird, mit der gleichen Geschwindigkeit wie die Entfernungslinie bewegt.

2. Verfahren zum Unterstützen beim Start eines Bootes nach Anspruch 1, **dadurch gekennzeichnet, dass** während des zweiten Schrittes das Aufzeichnen der Maximalgeschwindigkeit (Vm) mehrmals erfolgt, wobei die Maximalgeschwindigkeit der Entfernungslinie der Mittelwert der aufgezeichneten Maximalgeschwindigkeiten Vm ist.

3. Verfahren zum Unterstützen beim Start eines Bootes nach den Ansprüchen 1 oder 2, **dadurch gekennzeichnet, dass** die Angaben über den zu haltenden Kurs in digitaler Form oder in visueller Form vorliegen.

4. Vorrichtung (100) zum Unterstützen beim Start eines bei einer Regatta fahrenden Bootes, umfassend: einen Rechner (10), ein Satellitennavigationsmittel (11), ein Speichermittel (12) und ein Mittel (13) zum Eingeben von Informationen bezüglich der Position einer Startlinie in den Rechner und/oder in das Speichermittel,
wobei diese Vorrichtung **dadurch gekennzeichnet ist, dass** sie umfasst: Mittel (14) zum vorherigen Messen einer maximalen Testgeschwindigkeit, Mittel (10A) zum Berechnen einer Entfernungsstrecke, die der berechneten Maximalgeschwindigkeit, multipliziert mit einer der Dauer eines Vorwettlaufs entsprechenden Zeit (T) entspricht, Mittel (15) zum Simulieren der Verschiebung einer Entfernungslinie mit der genannten Testgeschwindigkeit (Vm), Mittel (16) zum Vergleichen der Geschwindigkeit und der Position des Bootes mit der Verschiebung der Entfernungslinie L, Mittel (17) zum Liefern von Angaben über die Abweichung der Geschwindigkeit und/oder der Strecke zwischen dem Boot und der Entfernungslinie und Anzeigemittel (19).

5. Vorrichtung zum Unterstützen beim Start eines bei einer Regatta fahrenden Bootes nach Anspruch 4, **dadurch gekennzeichnet, dass** sie Mittel (18) umfasst, um einen Verlauf der Geschwindigkeit des Bootes zu berechnen, damit seine Bewegung mit einer optimierten Bewegung in Bezug auf eine zu überfahrende Startlinie zur Übereinstimmung gelangt.

6. Vorrichtung zum Unterstützen beim Start eines bei einer Regatta fahrenden Bootes nach Anspruch 4 oder 5, **dadurch gekennzeichnet, dass** die Vorrichtung (100) in einen tragbaren Gegenstand wie etwa ein Mobiltelefon oder einen Tabletcomputer integriert ist.

7. Vorrichtung zum Unterstützen beim Start eines bei einer Regatta fahrenden Bootes nach Anspruch 4 oder 5, **dadurch gekennzeichnet, dass** die Vorrichtung in eine Uhr eingebaut ist.

8. Vorrichtung zum Unterstützen beim Start eines bei einer Regatta fahrenden Bootes nach Anspruch 4 oder 6 oder 7, **dadurch gekennzeichnet, dass** die Anzeigemittel (19) digital oder visuell sind.

9. Vorrichtung zum Unterstützen beim Start eines bei einer Regatta fahrenden Bootes nach Anspruch 8, **dadurch gekennzeichnet, dass** die Anzeigemittel (19) mindestens einen Zeiger (22A, 22C), der sich in einem Bezugssystem (22B, 22D) bewegt, umfassen.

10. Vorrichtung zum Unterstützen beim Start eines bei einer Regatta fahrenden Bootes nach Anspruch 8, **dadurch gekennzeichnet, dass** die Anzeigemittel (19) Leuchtanzeiger einer ersten Farbe (21a), einen Leuchtanzeiger einer zweiten Farbe (21b) und Leuchtanzeiger einer dritten Farbe (21c) umfassen, derart, dass die Leuchtanzeiger der ersten Farbe im Fall einer Nacheilung erleuchtet werden, die Leuchtanzeiger einer dritten Farbe im Fall einer Voreilung erleuchtet werden und der Leuchtanzeiger einer zweiten Farbe im Fall einer optimalen Position erleuchtet wird.

11. Vorrichtung zum Unterstützen beim Start eines bei einer Regatta fahrenden Bootes nach Anspruch 7, **dadurch gekennzeichnet, dass** das Glas der Uhr berührungsempfindlich ist.

## Claims

1. Race start assistance method for a boat (1) participating in a regatta including a pre-race having a duration (T) before the crossing of the start line (2), the method including a first step intended to permit the creation and storage of the start line (2) in virtual form, and the determination of the instantaneous speed (V) of the boat and the position thereof with respect to the start line, in order to provide at least one indication on how to proceed in the pre-race, the method being **characterized in that**:
- in a second step, prior to the race, at least one race start is simulated by performing a pre-race test, to measure and store, at least once, a parameter that is the maximum speed (Vm) or test speed of the boat, to deduce therefrom a maximum distance (D) that could be travelled during the pre-race duration if the boat moved at said test speed and thereby to determine the position of a line (L) called the maximum distance line; and
- in a third step, after positioning the boat between the maximum distance line (L) and the start line (2), a countdown period having a duration (T) is started during which, on the one hand, the distance line (L) moves towards the start line at the test speed (Vm) while the boat also moves towards the race line at a lower speed (V) than the maximum test speed and during which, on the other hand, the actual motion parameters of the boat are compared to the movement of the distance line to provide indications on the closeness of the distance line to the boat to enable the boat to adjust the speed and/or route thereof so that when the distance line catches up with the boat, said boat is moving at the same speed as said distance line.

2. Race start assistance method according to claim 1, **characterized in that**, during the second step, storage of the maximum speed (Vm) occurs several times, the maximum speed of the distance line being the mean of the stored maximum speeds (Vm).

3. Race start assistance method for a boat according to claims 1 or 2, **characterized in that** the indications on how to proceed are in digital form or in visual form.

4. Race start assistance device (100) for a boat competing in a regatta, including a calculator (10), a satellite positioning means (11), a storage means (12), a means (13) for entering information relating to a start line position in the calculator and/or the storage means,
said device being **characterized in that** it includes means (14) for predetermining a maximum test speed, means (10A) for calculating a separation distance corresponding to the calculated maximum speed multiplied by a time (T) corresponding to the duration of a pre-race, means (15) for simulating the movement of a line called the distance line at the test speed (Vm), means (16) for comparing the speed and the position of the boat with respect to the movement of the distance line (L), means (17) for providing indications as to the difference in speed and/or the distance between the boat and the distance line and display means (19).

5. Race start assistance device for a boat competing in a regatta according to claim 4, **characterized in that** the device includes means (18) for calculating the evolution of the speed of the boat so that the motion thereof coincides with an optimised motion with respect to the start line to be crossed.

6. Race start assistance device for a boat competing in a regatta according to claim 4 or 5, **characterized in that** the device (100) is integrated in a portable object, such as a mobile telephone or a tablet.

7. Race start assistance device for a boat competing in a regatta according to claim 4 or 5, **characterized in that** the device is integrated in a watch.

8. Race start assistance device for a boat competing in a regatta according to claim 4 or 6 or 7, **characterized in that** the display means (19) are digital or visual.

9. Race start assistance device for a boat competing in a regatta according to claim 8, **characterized in that** the display means (19) include at least one hand (22A, 22C) moving on a scale mark (22B, 22D).

10. Race start assistance device for a boat competing in a regatta according to claim 8, **characterized in that** the display means (19) include indicator lights (19) having a first colour (21a), one indicator light having a second colour (21b) and indicator lights having a third colour (21c), so that the indicator lights having a first colour are illuminated in the event of a lag position, the indicator lights having a third colour are illuminated in the event of an ahead position and the indicator light having a second colour is illuminated in the event of an optimal position.

11. Race start assistance device for a boat competing in a regatta according to claim 7, **characterized in that** the watch crystal is touch-sensitive.
